# EUROPEAN PATENT APPLICATION

(11) **EP 1 815 836 A1**
(43) Date of publication of application: **08.08.2007**
(21) Application number: 05751030.7
(22) Date of filing: 13.06.2005
(51) Int. Cl.: A61H 33/06

(54) **THERMOTHERAPIC SAUNA APPARATUS**

(30) Priority: 24.11.2004 JP 2004338846
(71) Applicant: Tei, Rehi, Kagoshima-shi Kagoshima 891-0107 (JP)
(72) Inventor: NAGASE, Kimiharu, Takaoka-shi, Toyama 933-0045 (JP); MIYAHARA, Moriaki, Tachikawa-shi, Tokyo 190-0013 (JP)
(74) Representative: HOFFMANN EITLE
(86) International application number: PCT/JP2005/011197
(87) International publication number: WO 2006/057091

(57) **Abstract**

In order to attain adequate thermotherapic effect in a sauna room without forcing any extra burden on a patient, an aged person or a disabled person, an intake/exhaust fan, a room temperature sensor for measuring the room temperature, and a planar heater radiating infrared rays are provided in the sauna room keeping dry hot atmosphere. A sequence controller controls the planar heater according to the output from the room temperature sensor such that a predetermined thermotherapic bathing pattern where the room temperature of the sauna room and the time are predetermined is attained depending on the setting of a thermotherapic mode.

## Description

### Technical Field

The present invention relates to a therapeutic sauna apparatus in which the effect of hyperthermia due to sauna bathing is used for therapy.

### Background Art

Sauna apparatuses commonly include an electric heater and a steam generator arranged in the sauna room to maintain a wet atmosphere of around 100°C in the room. These kinds of sauna apparatuses positively promote sweating and thereby have a relaxing and soothing effect on the body and mind of healthy persons. However, such apparatuses may unsuitably assume risk of increased strain on the heart and/or the blood-vascular system of patients suffering from cardiac failure, high-blood pressure, or arrhythmia, etc., and elderly persons.

Meanwhile, in order to achieve the full effect of thermal therapy, it is considered desirable to take a sauna bath in accordance with a predetermined bathing pattern that includes a preliminarily defined time-temperature relationship. That is, it is desirable to maintain a heating temperature without any excess strain on the body for a predetermined time to raise the temperature in the deep parts of the body, and then to maintain a warming temperature slightly lower than the heating temperature for a predetermined time so that an increase in the body temperature is continued for a certain time period.

However, conventional sauna apparatuses for thermal therapy have only a feature of increasing the effect of hyperthermia in the sauna room, and so far there has not yet been proposed an apparatus in which an appropriate thermal therapy according to such a predetermined bathing pattern as above can be received while staying in the sauna room.

Also, during a thermal therapy using a sauna apparatus, it is necessary to ensure safety for patients suffering from cardiac failure, high-blood pressure, or arrhythmia, etc., and elderly persons. However, so far there has also not yet been proposed a sauna apparatus for thermal therapy that takes sufficient account of such a safety issue.

The present invention has been made to solve the above-described problems, and an object thereof is to provide a sauna apparatus for thermal therapy in which it is possible to take a sauna bath in accordance with a predetermined bathing pattern for thermal therapy while staying in the sauna room to reduce unnecessary strain on patients and elderly persons as much as possible and thereby to sufficiently increase the effect of thermal therapy, and to further ensure sufficient safety.

### Disclosure of the Invention

A sauna apparatus for thermal therapy according to Claim 1 of the present invention is characterized by having a sauna room for maintaining a dry-heat atmosphere, the sauna room providing therein a fan for air intake and exhaust and a room temperature detecting sensor for detecting the temperature in the sauna room, in a required area on the inner wall of the sauna room being provided with a sheet heater that radiates far-infrared rays. The sauna room further comprises a controller for sequence control, the controller being adapted to control the fan and the sheet heater based on a detection output from the room temperature detecting sensor so that when a thermal therapy mode is set, the temperature in the sauna room and the time accordingly follow a predetermined bathing pattern for thermal therapy.

Then, in accordance with the sauna apparatus for thermal therapy, once entering the sauna room, it is possible to take a sauna bath in accordance with a predetermined bathing pattern for thermal therapy by automatic control of the controller while staying in the sauna room, which allows the full effect of thermal therapy to be achieved.

In the invention of Claim 2, the sauna apparatus for thermal therapy according to Claim 1 is characterized in that the bathing pattern is set by combining a heating state to be maintained at a predetermined heating temperature Ha required to raise the body temperature in the deep parts of a bather for a predetermined heating time Ta and a warming state to be maintained at a warming temperature Hb lower than the heating temperature Ha for a predetermined warming time Tb, whereby it is possible to save the trouble of maintaining a warming state in a blanket as in a conventional manner after exiting the sauna room when a heating state passes, which can expediently reduce strain on patients, elderly persons, or disabled persons as much as possible.

In the invention of Claim 3, the sauna apparatus for thermal therapy according to Claim 2 is characterized in that the heating state includes a heating temperature Ha of approximately 60°C and a heating time Ta of approximately 15 minutes, while the warming state includes a warming temperature Hb of approximately 40 to 45°C and a warming time Tb of approximately 20 to 30 minutes, whereby it is possible to achieve a further more appropriate effect of thermal therapy based on therapeutic records of the past.

In the invention of Claim 4, the sauna apparatus for thermal therapy according to Claim 2 or 3 is characterized in that the sauna room provides therein information means such as an information buzzer for informing of the course of a thermal therapy, while the controller is adapted to initiate the information means such as an information buzzer when the heating temperature Ha is reached, the warming temperature Hb is reached, or the warming time Tb passes. Therefore, a bather can recognize the course of the thermal therapy sufficiently, which can prevent a problem in that the bather may unexpectedly exit the sauna room during the thermal therapy to be suspended.

In the invention of Claim 5, the sauna apparatus for thermal therapy according to Claim 3 is characterized in that the sauna room includes microphones and speakers arranged, respectively, inside and outside the room whereby it is possible to have a conversation between the inside and the outside of the room. Therefore, when a bather feels ill during a thermal therapy, it is possible to make communication between persons inside and outside the room through the microphones and speakers without opening the front door or raising their voices, which can ensure sufficient safety.

In the invention of Claim 6, the sauna apparatus for thermal therapy according to Claim 3 is characterized in that the sauna room provides therein a clearance for allowing an intravenous line to be connected to an intravenous feed to get therethrough from outside to inside the room between an entrance door and an entrance frame so that a patient on an intravenous drip can be put on a drip even in the sauna room without detaching the intravenous feed. Therefore, even a severely ill patient on an intravenous drip can receive a thermal therapy while being put on a drip in the sauna room.

### Brief Description of the Drawings

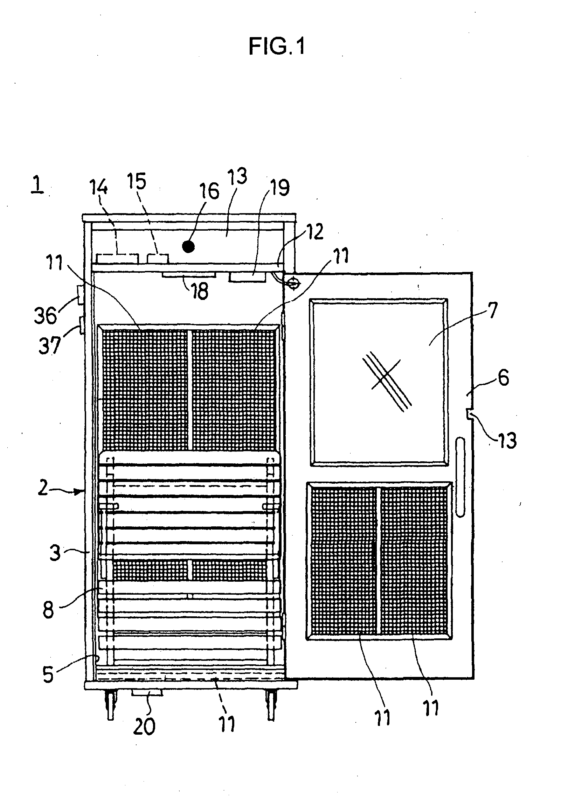

FIG. 1 is a front elevational view showing the overall configuration of a sauna apparatus for thermal therapy according to an embodiment of the present invention with the front door thereof being opened;

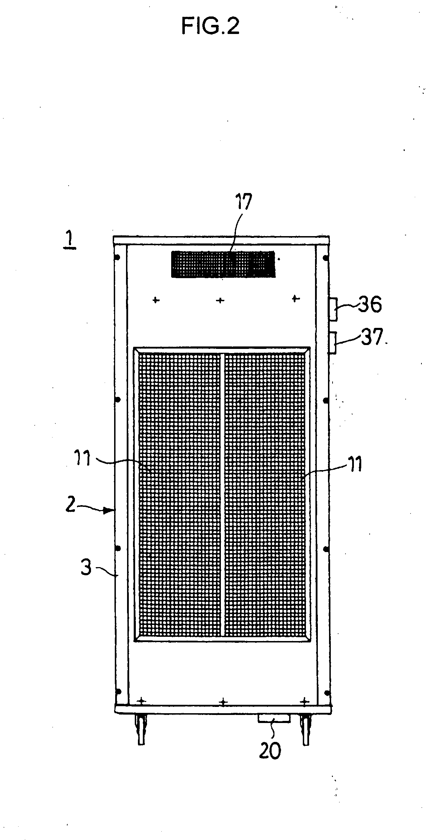

FIG. 2 is a rear elevational view of the sauna apparatus for thermal therapy;
FIG. 3 is a left side cross-sectional view of the sauna apparatus for thermal therapy;
FIG. 4 is a plan cross-sectional view of the sauna apparatus for thermal therapy;
FIG. 5 is a separated side elevational view of a chair installed in the sauna apparatus for thermal therapy;
FIG. 6 is a front elevational view of a control panel provided in the sauna room of the sauna apparatus for thermal therapy;
FIG. 7 is a block diagram showing the overall configuration of a controller and various accompanying units of the sauna apparatus for thermal therapy; and
FIG. 8 is a timing chart showing a bathing pattern for thermal therapy.

### Best Mode for Carrying Out the Invention

An embodiment of a sauna apparatus for thermal therapy according to the present invention will hereinafter be described with reference to the accompanying drawings.

The sauna apparatus 1 for thermal therapy has a sauna room 2 for maintaining a dry-heat atmosphere. In the sauna room 2 are provided a box-shaped sauna room body 3 and a front door 6 arranged in the front of the sauna room body 3 to open and close an entrance 5, the room ensuring a space in which a person can stay easily.

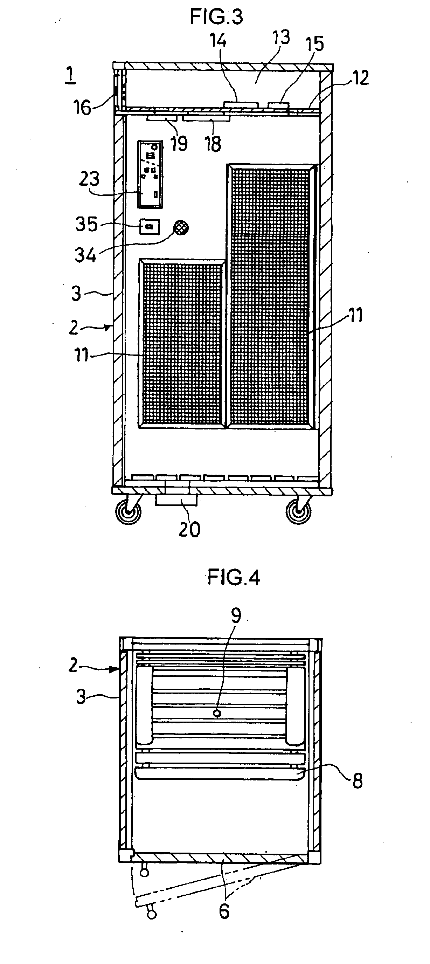

Then, in the front door 6 is provided an observation window 7 formed by fitting glass, etc., therein so that the situation inside the sauna room 2 can be confirmed, while inside the sauna room body 3 is detachably provided a wooden chair 8 with armrests, on the chair 8 being disposed a sitting switch 9 (refer to FIG. 4) for detecting a seated state of a bather.

Also, in the free end portion of the front door 6 is provided a notch-shaped clearance 13 opened toward the free end side of the door. The clearance 13 is for introducing an intravenous line such as an intravenous tube to be connected to an intravenous feed from outside to inside the sauna room 2 so that a patient on an intravenous drip can be put on a drip even in the room without detaching the intravenous feed, and is formed by cutting out part of the free end edge of the front door 6 as shown in the figure. It is only required that the clearance 13, which may be provided in the entrance frame of the sauna room body 3 or between the door and the frame, can at least introduce an intravenous line such as an intravenous tube to be connected to an intravenous feed from outside to inside the sauna room 2 even when a patient on an intravenous drip opens the front door 6 to enter the room with the line connected to the intravenous feed.

Thus providing the clearance 13 for introducing the intravenous line between the entrance door and the entrance frame allows even a severely ill patient on an intravenous drip to receive a thermal therapy while being put on a drip in the sauna room, resulting in a further increase in the effect thereof.

In addition, in a required area inside the sauna room 2 are arranged sheet heaters 11. That is, a total of ten sheet heaters 11 with their respective sizes are disposed in two areas on the back wall, two areas on each of the right and left sidewalls, one area on the floor, two areas on the inner surface of the front door 6, and one area under the sitting part of the chair 8 in the sauna room body 3 so that the temperature distribution inside the sauna room 2 becomes as uniform as possible. In addition, the sheet heater 11 placed under the sitting part of the chair 8 is connected to a power cable via an outlet, etc. , not shown in the figure.

Each sheet heater 11 is formed by sequentially laminating, for example, a net and cloth material for burn prevention, a sheet heating element, an aluminum foil for heat reflection, and a thermal insulating plate to be incorporated in a frame. The sheet heating element, which radiates far-infrared rays, is formed, for example, by applying a mixture of carbon powder and bonding material such as polyethylene to an insulating substrate to form a resistive film having a required electric resistance, fixing a conductive wire across the whole length thereof, and depositing an electrically poor-conductive heat-resistant waterproof film on the surface thereof, the structure itself of the element being well-known.

In the ceiling part of the sauna room body 3 is provided a partition plate 12, and in the installation space formed on the partition plate 12 are arranged a controller 14 and a remote control receiver 15, etc. In addition, reference numerals 16 and 17 denote vent holes for communicating the installation space 13 with the external atmosphere. On the underside of the partition plate 12 are also fitted an interior lamp 18 and an exhaust fan 19, while on the floor of the sauna room body 3 is provided an intake fan 20.

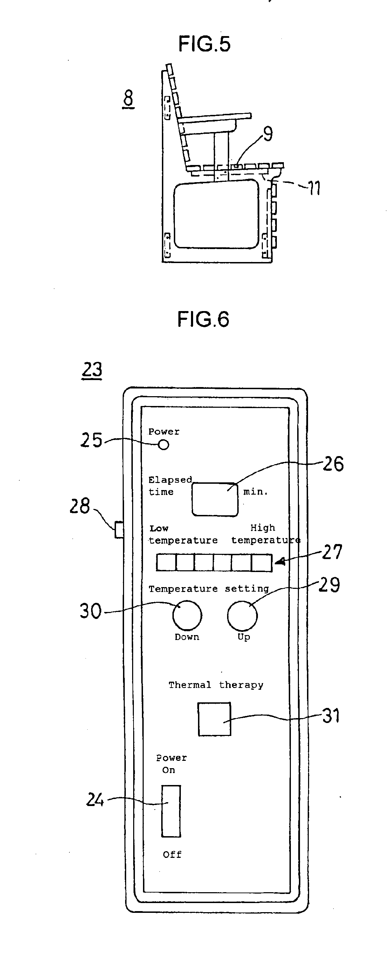

In addition, on the inner surface of one sidewall of the sauna room body 3 is provided a control panel 23. Then, on the control panel 23 are arranged, as shown in FIG. 6, a power switch 24, a power lamp 25, a time indicator 26 composed of a liquid crystal panel, etc., to indicate the elapsed time for sauna bathing, a temperature indicator 27 composed of a plurality of LEDs to indicate the preset temperature in the sauna room 2, a room temperature detecting sensor 28 for detecting the room temperature, a temperature raising switch 29 and a temperature lowering switch 30 for raising and lowering the preset room temperature when taking a normal sauna bath except for thermal therapy, and a thermal therapy mode setting switch 31 for setting a thermal therapy mode.

Meanwhile, in the vicinity of the control panel 23 of the sauna room body 3 are arranged a microphone 34 and an emergency stop button 35, while in predetermined areas on the exterior of the sauna room 2 are arranged a speaker 36 for amplifying the voice of a bather collected by the microphone 34 and an alarm buzzer 37 for raising an alarm in response to the emergency stop button 35. In a predetermined area on the interior of the sauna room 2 is also arranged a speaker, while in a predetermined area on the exterior of the sauna room 2 is arranged a microphone, though not shown in the figure.

In the present embodiment, since the microphones 34 and the speakers 36 are thus arranged, respectively, inside and outside the room, when a bather feels ill during a thermal therapy, it is possible to make communication between persons inside and outside the room through the microphones 34 and the speakers 36 without opening the front door 6 or raising their voices. Further, pressing the emergency stop button 35 allows the alarm buzzer 37 to accordingly raise an alarm via the controller 14, whereby it is possible to pay prompt attention to the occurrence of an abnormality, which can ensure sufficient safety.

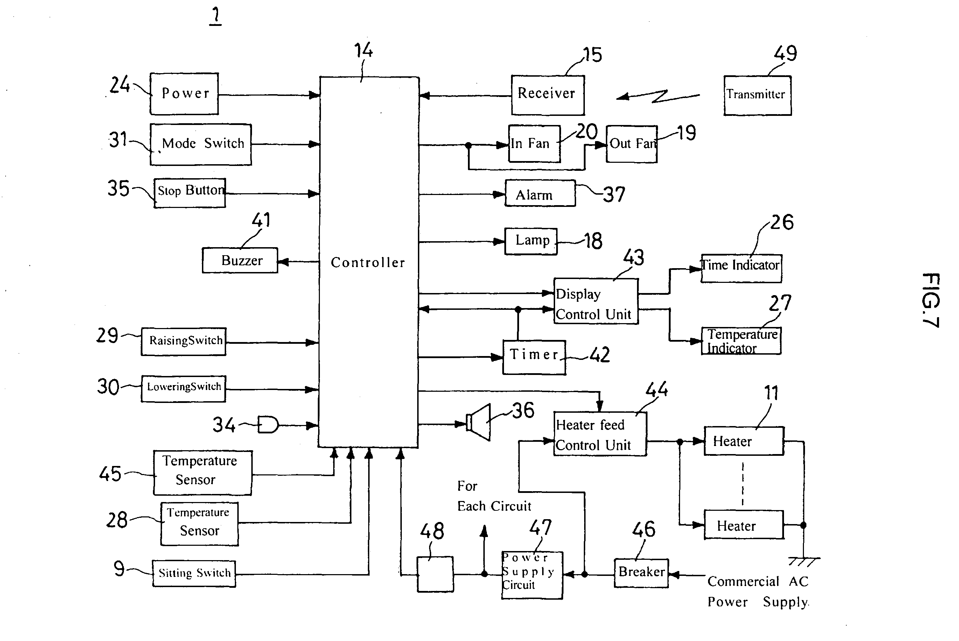

FIG. 7 is a block diagram showing the overall configuration of the controller 14 and various accompanying units.

In the figure, the controller 14, which is composed of a microcomputer, etc., is adapted to control the entire apparatus by installing a predetermined control program. Especially in the present embodiment, the controller 14 is adapted to control the exhaust and intake fans 19 and 20 and the sheet heaters 11 based on a detection output from the roomtemperature detecting sensor 28 so that when a thermal therapy mode is set by the thermal therapy mode setting switch 31 on the control panel 23 or a remote control transmitter 49 to be described hereinafter, the temperature in the sauna room 2 and the time accordingly follow a predetermined bathing pattern for thermal therapy. The control action of the controller 14 when performing a thermal therapy will hereinafter be described in more detail.

Reference numeral 41 denotes an information buzzer for informing of the course of a thermal therapy, and is provided in the vicinity of the controller 14. Reference numeral 42 denotes a timer for time keeping, the timer 42 being adapted to start time keeping when the sitting switch 9 detects that a bather sits on the chair 8. Reference numeral 43 denotes a display control unit adapted to control the display of the time indicator 26 and the temperature indicator 27 based on a command from the controller 14.

Reference numeral 44 denotes a heater feed control unit adapted to control the power supply to the sheet heaters 11 so that the room temperature shows a desired value, and is composed by combining, for example, a plurality of relay circuits. Reference numeral 45 denotes a sheet heater temperature detecting sensor composed of a thermistor; etc. , to detect the temperature of the sheet heaters 11 to ensure safety, reference numeral 46 denotes a circuit breaker provided in an intermediate portion of a power line for commercial AC power supply, reference numeral 47 denotes a power supply circuit for DC conversion adapted to convert commercial AC power into DC power, reference numeral 48 denotes a reset circuit for resetting the controller 14 in response to power on, and reference numeral 49 denotes a remote controltransmitterfor transmitting athermaltherapy mode setting signal to the remote control receiver 15. In addition, the other units are as mentioned above, and description thereof will be omitted.

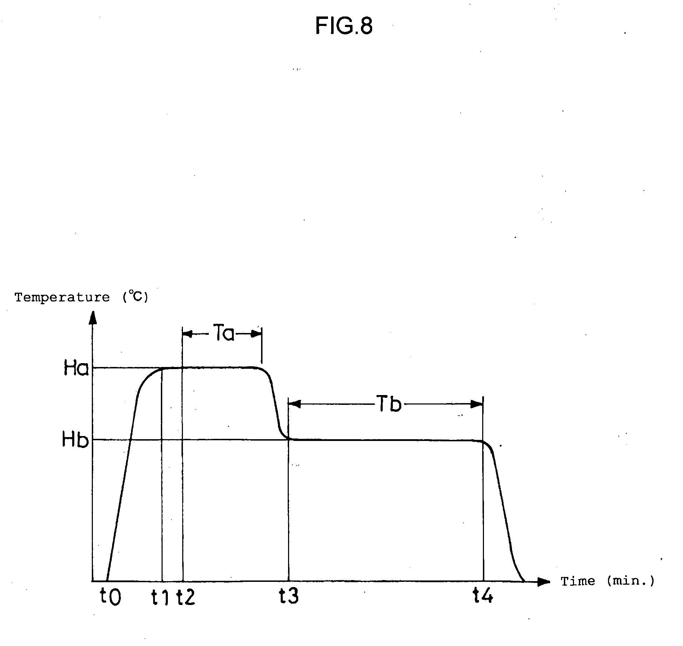

Next, the control action of the controller 14 when performing a thermal therapy will be described with reference to the timing chart shown in FIG. 8.

The controller 14 controls the sheet heaters 11 to be heated via the heater feed control unit 44 based on a detection output from the room temperature detecting sensor 28 so that when a thermal therapy mode is set by the thermal therapy mode setting switch 31 or the remote control transmitter 49 (time t0 in FIG. 8), the temperature in the sauna room 2 becomes a heating temperature Ha (60°C in this example). In the case above, the interior lamp 18 is kept off until the room temperature reaches the heating temperature Ha.

Then, the controller 14 controls the interior lamp 18 to be turned on when the room temperature reaches the heating temperature Ha. Next, when a bather sits on the chair 8 to turn the sitting switch 9 on (time t2 in FIG. 8), the controller 14 accordingly starts the timer 42 and maintains the heating state at the heating temperature Ha until a certain heating time Ta (15 minutes in this example) passes. This allows the body temperature in the deep parts of the bather to be raised by about 1.0 to 1.2°C.

When the heating time Ta passes, the timer 42 indicates that the time is up, and then the controller 14 accordingly drives the exhaust and intake fans 19 and 20 to ventilate the sauna room 2 and thereby lower the room temperature.

Subsequently, when it is determined that the room temperature reaches a warming temperature Hb (40°C in this example), the controller 14 stops the operation of the fans 19 and 20 and restarts the timer 42 based on a detection output from the room temperature detecting sensor 28, and further maintains the warming state at the heating temperature Hb until a certain warming time Tb (30 minutes in this example) passes.

Then, when the warming time Tb passes, the timer 42 indicates that the time is up, and then the controller 14 accordingly stops the power supply to the sheet heaters 11.

In relation to the above-described sequence control, the controller 14 initiates the information buzzer 41,based on a detection output from the room temperature detecting sensor 28 and a time kept by the timer 42 when the room temperature reaches the heating temperature Ha (time t1 in FIG. 8) or the warming temperature Hb (time t3 in FIG. 8), or the warming time Tb passes (time t4 in FIG. 8). Thus, a bather can recognize the course of a thermal therapy sufficiently, which can prevent a problem in that the bather may unexpectedly exit the sauna room 2 during the thermal therapy to be suspended.

In addition, in order to achieve an appropriate effect of thermal therapy, it is most desirable, based on therapeutic records of the past, to include a heating temperature Ha of 60°C, a heating time Ta of 15 minutes, a warming temperature Hb of 40 to 45°C, and a warming time Tb of 20 to 30 minutes in a bathing pattern as mentioned above, but these values cannot be decided uniformly. The temperature Ha, Hb and the time Ta, Tb can be changed expediently in accordance with the condition of a bather such as a patient.

As mentioned heretofore, in accordance with the sauna apparatus 1 for thermal therapy of the present embodiment, once entering the sauna room 2, it is possible to take a sauna bath in accordance with a predetermined bathing pattern for thermal therapy by automatic control of the controller 14 while staying in the sauna room 2, which allows a desired effect of thermal therapy to be achieved. Also, in the present embodiment, the bathing pattern is set by combining the heating state and the warming state in a series manner, whereby it is possible to save the trouble of maintaining a warming state in a blanket as in a conventional manner after exiting the sauna room 2 when a heating state passes, which can expediently reduce strain on patients and elderly persons.

Besides the above-described embodiment, the following modifications and applications may be made thereto.
(1) Although in the above-described embodiment, the heating temperature Ha, the warming temperature Hb, the heating time Ta, and the warming time Tb included in the bathing pattern for thermal therapy take preset constant values, it is possible to provide another adjustment switch to allow the values of Ha, Hb, Ta, and Tb to be changed in each case.
(2) An ozone generator may be installed in the sauna room 2 to perform automatic deodorization and sterilization using ozone when no bather exists. Thus using an ozone generator expediently makes it possible not to be concerned about lingering odors and to keep cleanliness.
(3) In view of the availability for disabled persons and elderly persons, it is possible to install handrails on the right and left sides and on the back side inside the sauna room 2 to allow the persons to easily get up from and sit on the chair 8.
(4) It is also possible to provide the chair 8 detachably and to place a grate-shaped floorboard slidably on the floor of the sauna room 2, where after removing the chair 8 as appropriate, the floorboard may be drawn out from the entrance 5 to make the entrance even, whereby it is possible to come in and out the sauna room 2 while in a wheelchair.
(5) It is further possible to provide a storable table on one side of the chair 8, where the table may be drawn out as appropriate to be used, or to fit foldable leg parts to the grate-shaped floorboard, where the floorboard may be brought out as a table in front of the chair 8 as appropriate, resulting in an improvement in convenience.
(6) It is still further possible to attach a panel including a two-dimensional QR code in an appropriate area inside the sauna room 2, where taking the QR code with, for example, a mobile phone camera to access the corresponding site on the Internet allows information concerning thermal therapy to be gotten freely.
(7) It is also possible to ensure a pipe insertion hole for oxygen inhalation in advance in a sidewall of the sauna room 2 in accordance with the medical condition of a patient who is to receive a thermal therapy.
(8) Furthermore, the present invention is not restricted to the above-described embodiment or modifications, but may be arranged appropriately without departing from the gist thereof.

## Claims

1. A sauna apparatus for thermal therapy having a sauna room for maintaining a dry-heat atmosphere, the sauna room providing therein a fan for air intake and exhaust and a room temperature detecting sensor for detecting the temperature in the sauna room, in a required area on the inner wall of the sauna room being provided with a sheet heater that radiates far-infrared rays, the sauna room further comprising a controller for sequence control, wherein the controller is adapted to control the fan and the sheet heater based on a detection output from the room temperature detecting sensor so that when a thermal therapy mode is set, the temperature in the sauna room and the time accordingly follow a predetermined bathing pattern for thermal therapy.

2. The sauna apparatus for thermal therapy according to Claim 1, wherein the bathing pattern is set by combining a heating state to be maintained at a predetermined heating temperature Ha required to raise the body temperature in the deep parts of a bather for a predetermined heating time Ta and a warming state to be maintained at a warming temperature Hb lower than the heating temperature Ha for a predetermined warming time Tb.

3. The sauna apparatus for thermal therapy according to Claim 2, wherein the heating state includes a heating temperature Ha of approximately 60°C and a heating time Ta of approximately 15 minutes, while the warming state includes a warming temperature Hb of approximately 40 to 45°C and a warming time Tb of approximately 20 to 30 minutes.

4. The sauna apparatus for thermal therapy according to Claim 2 or 3, wherein the sauna room provides therein information means such as an information buzzer for informing of the course of a thermal therapy, while the controller is adapted to initiate the information means such as an information buzzer when the heating temperature Ha is reached, the warming temperature Hb is reached, or the warming time Tb passes.

5. The sauna apparatus for thermal therapy according to Claim 3, wherein the sauna room includes microphones and speakers arranged, respectively, inside and outside the room whereby it is possible to have a conversation between the inside and the outside of the room.

6. The sauna apparatus for thermal therapy according to Claim 3, wherein the sauna roomprovides therein a clearance for allowing an intravenous line to be connected to an intravenous feed to get therethrough from outside to inside the room between an entrance door and an entrance frame so that a patient on an intravenous drip can be put on a drip even in the sauna room without detaching the intravenous feed.
